(19) Europäisches Patentamt

European Patent Office

Office européen des brevets

(11) Veröffentlichungsnummer: **0 040 710**
**B1**

(12) **EUROPÄISCHE PATENTSCHRIFT**

(45) Veröffentlichungstag der Patentschrift:
**06.02.85**

(21) Anmeldenummer: **81103234.1**

(22) Anmeldetag: **29.04.81**

(51) Int. Cl.⁴: **C 09 D 5/22,** C 09 K 11/02,
C 09 D 11/02

(54) **Nachleuchtfarbe und Verwendung derselben.**

(30) Priorität: **20.05.80 DE 3019260**

(43) Veröffentlichungstag der Anmeldung:
**02.12.81 Patentblatt 81/48**

(45) Bekanntmachung des Hinweises auf die Patenterteilung:
**06.02.85 Patentblatt 85/6**

(84) Benannte Vertragsstaaten:
**AT BE CH FR GB IT LI LU NL SE**

(56) Entgegenhaltungen:
**FR - A - 2 168 685**
**FR - E - 74 193**
**GB - A - 2 017 741**
**US - A - 3 935 158**

**Die Akte enthält technische Angaben, die nach dem Eingang der Anmeldung eingereicht wurden und die nicht in dieser Patentschrift enthalten sind.**

(73) Patentinhaber: **Kollmer, Peter, Bertholdstrasse 18, D-7630 Lahr (DE)**

(72) Erfinder: **Kollmer, Peter, Bertholdstrasse 18, D-7630 Lahr (DE)**

(74) Vertreter: **Patentanwälte Henkel, Pfenning, Feiler, Hänzel & Meinig, Möhlstrasse 37, D-8000 München 80 (DE)**

## Beschreibung

Nachleuchtfarbe zu Dekorations- oder Markierungszwecken mit nachleuchtendem Zinksulfid und einem Acrylharz als Bindemittel.

Die Erfindung betrifft eine bindemittelhaltige Nachleuchtfarbe mit nachleuchtendem Zinksulfid.

Nachleuchtfarben auf der Basis von Zinksulfid, die bei Bestrahlung oder Belichtung für eine gewisse Zeit zum Leuchten angeregt werden, sind bekannt und wurden bereits auf den verschiedensten Einsatzgebieten zum Einsatz gebracht. Bei ihrer Verwendung zu Strassenmarkierungszwekken hat es sich jedoch gezeigt, dass sich das den aktiven Bestandteil der Nachleuchtfarbe bildende Zinksulfid nicht in geeigneter Weise auf dem Strassenbelag verankern lässt und einem starken Abrieb unterliegt. Die Haltbarkeit der mit den bekannten Nachleuchtfarben aufgebrachten Strassenmarkierungen lässt somit erheblich zu wünschen übrig.

Auf dem Siebdruckgebiet gelangten bereits Zinksulfid-Nachleuchtfarben zum Einsatz. Diese enthielten als Bindemittel eine Mischpolymerisatdispersion auf der Basis von Vinylpropionat. Mit Hilfe dieses Bindemittels lässt sich das Zinksulfid nicht in dauerhafter Weise auf dem zu bedruckenden Untergrund verankern.

Aus der DE-AS 2 627 932 ist eine bindemittelhaltige Nachleuchtfarbe mit ZnS als Leuchtpigment als Sicherheitsanstrich für die verschiedensten Zwecke, bei der Herstellung von Sportbekleidung, Sportgeräten und Planen und für das Einfärben von Kunststoffgegenständen aller Art bekannt.

Die bekannte Nachleuchtfarbe kann gemäss Beispiel 1 als Bindemittel einen isocyanatvernetzbaren Acrylatlack enthalten. Eine dieses Bindemittel enthaltende Nachleuchtfarbe des Beispiels 1 der DE-AS 2 627 932 eignet sich dann zur Herstellung nachleuchtender Hinweis- und Warnschilder.

Bei dieser Applikationsform ist die bekannte Nachleuchtfarbe zwangsläufig keiner besonderen mechanischen Belastung ausgesetzt, trotzdem muss aber das Bindemittel «Acrylatlack» noch extra durch zugesetztes Polyisocyanat vernetzt werden.

In Fällen, in denen die applizierte Nachleuchtfarbe starken mechanischen Beanspruchungen ausgesetzt ist, z.B. als Strassenmarkierung, benötigt man ein Bindemittel, das (zusammen mit dem nachleuchtenden Zinksulfid) ohne Schwierigkeiten applizierbar ist, nicht erst vernetzt werden muss und trotz hoher mechanischer Beanspruchung das nachleuchtende Zinksulfid dauerhaft auf der Strassendecke festhält, also praktisch selbst keinem Abrieb unterliegt und keinen Abrieb des Leuchtpigments zulässt.

Offensichtlich ist auch die aus der DE-AS 2 627 932 bekannte bindemittelhaltige Nachleuchtfarbe gar nicht zum Einsatz auf Applikationsgebieten, die einer starken mechanischen Belastung ausgesetzt sind, also z.B. als Strassenmarkierungsfarbe, vorgesehen. Ein Einsatz der bekannten Nachleuchtfarbe zur Strassenmarkierung ist nämlich schon wegen der bekannten Sprödigkeitseigenschaften von einen zwingenden Bestandteil der bekannten Nachleuchtfarbe bildenden Melaminharzen nicht sinnvoll, denn Sprödigkeit verträgt sich nicht mit der zu fordernden Abriebbeständigkeit (vgl. Stock «Farben- und Lackindustrie», 13. Auflage, Seite 129).

Aufgrund der Sprödigkeitseigenschaften der Melaminharze ist auch nicht zu erwarten, dass die bekannte Nachleuchtfarbe, wenn sie zur Herstellung von Sportbekleidung oder zum Einfärben von Kunststoffgegenständen verwendet wird, lange hält, wenn die betreffende Sportbekleidung oder die Kunststoffgegenstände einer grösseren mechanischen Belastung, z.B. durch öfteres Waschen oder Schlageinwirkung, ausgesetzt werden.

Bei den aus der DE-AS 1 045 016 bekannten bindemittelhaltigen Nachleuchtfarben soll insbesondere das Vergrauen der Leuchtpigmente verhindert werden. Das Beispiel der DE-AS 1 045 016 ist ebenso wie Beispiel 2 der DE-AS 2 627 932 lediglich mit der Herstellung von keiner besonderen mechanischen Beanspruchung ausgesetzten nachleuchtenden Folien befasst, ein Einsatz der bekannten Nachleuchtfarbe z.B. zur Herstellung von Strassenmarkierungen ist offensichtlich gemäss der DE-AS 1 045 016 nicht vorgesehen. Dasselbe gilt auch für die als «Einbettungsmittel» für Folien oder Anstriche bezeichneten Polystyrollakke (DE-AS 1 045 016, Spalte 1, Zeilen 7 bis 11).

Aus der FR-PS 74 193 ist es bekannt, Unterlagen, wie Papier, Leder, Karton, Holz oder Glas durch Auftragen und -trocknen von Zinksulfid enthaltenden Polyvinylacetatemulsionen mit nachleuchtenden Dekorationen zu versehen. Die gemäss den Lehren der FR-PS 74 193 mit nachleuchtenden Dekorationen zu versehenden Unterlagen sind weder als solche noch nach Applikation der dekorativen Muster besonderen mechanischen Belastungen ausgesetzt, so dass die Verwendung des Vinylacetat-Homopolymerisat-Bindemittels zum Verankern des nachleuchtenden Zinksulfids auf dem Untergrund durchaus ausreicht. Einschlägige Versuche haben jedoch gezeigt, dass Vinylacetat-Homopolymerisate dann das nachleuchtende Zinksulfid nicht mehr in ausreichendem Masse und dauerhaft auf dem Untergrund zu verankern vermögen, wenn der mustergerecht mit der Nachleuchtfarbe versehene Untergrund einer hohen mechanischen Belastung bzw. Dauerbelastung, wie dies beispielsweise bei Fussbällen, öfter zu waschenden Kleidungsstükken, Strassen-, Start- und Landebahnbelägen u.dgl. der Fall ist, ausgesetzt ist.

Aus der US-PS 3 935 158 sind Heissschmelz-Strassenmarkierungsfarben bekannt, die als wesentliche thermoplastische Harzbestandteile mindestens ein aliphatisches Kohlenwasserstoffharz und mindestens ein Ethylen/Vinylester-Mischpolymerisat in Kombination enthalten. Die bekannten Heissschmelz-Strassenbeläge basieren auf aliphatischen Kohlenwasserstoffharzen und enthalten – quasi als Hilfsmittel – zur Verbesserung ihrer Fliessfähigkeit in erschmolzenem Zustand ein Ethylen/Vinylester-Mischpolymerisat. Dies bedeutet, dass letztere Mischpolymerisate lediglich in untergeordneter Menge (bis höchstens 40 Gew.-% des Bindemittelanteils) vorhanden sein dürfen, da sonst Markierungen verminderter Härte und Abnutzungsbeständigkeit sowie erhöhter Oberflächenklebrigkeit erhalten werden (vgl. Spalte 2, Zeilen 43 bis 50). Durch diese Aussage wird der Fachmann nachgerade davon abgehalten, als alleiniges Bindemittel für Strassenmarkierungsfarben ein Vinylester-Mischpolymerisat schlechthin zu verwenden.

Es hat sich nun überraschenderweise gezeigt, dass man Nachleuchtfarbe auf der Basis von Zinksulfid bei Mitverwendung bestimmter Bindemittel mit grossem Erfolg auf den genannten Einsatzgebieten bzw. anderen Einsatzgebieten verwerten kann. So ist es beispielsweise gelungen, mit einer bindemittelhaltigen Nachleuchtfarbe gemäss der Erfindung auch Bereiche oder Gegenstände, die einer starken mechanischen Beanspruchung ausgesetzt sind, dauerhaft nachleuchtend zu markieren.

Gegenstand der Erfindung ist somit eine Nachleuchtfarbe der eingangs beschriebenen Art, welche dadurch gekennzeichnet ist, dass sie als Bindemittel ein Acrylsäureester/Vinylacetat-Mischpolymerisat oder Acrylsäureester/Styrol-Mischpolymerisat enthält.

Ein interessantes Applikationsgebiet für erfindungsgemässe Nachleuchtfarbe der beschriebenen Art ist die Markierung von in den Abendstunden verwendetem Sportgerät, z.B. Bällen, wie Fussbällen oder Bällen zum Baseball-Spiel, Rugby u.dgl. Zu diesem Zweck lässt sich die Nachleuchtfarbe dauerhaft und haltbar von aussen her auf die Ballhülle oder -aussenseite aus beispielsweise Kunststoff oder Leder, beispielsweise durch Aufsprühen, applizieren.

Bezogen auf das Gesamtgewicht der zu applizierenden Nachleuchtfarbe beträgt die Menge an Zinksulfid etwa 10% und an Bindemittel etwa 40%. Der Rest besteht aus Lösungsmittel, wie Benzol, Toluol u.dgl.

Derart «nachleuchtend» gemachte Fussbälle können beim Abendtraining auch bei schwächerem Flutlicht (Energieeinsparung) verwendet werden, da sie infolge ihrer Nachleuchteigenschaften hervorragend sichtbar sind. Überraschenderweise erleiden die nachleuchtend gemachten Fussbälle während ihrer Lebensdauer trotz der erheblichen mechanischen Beanspruchung weder eine Einbusse an Nachleuchtfähigkeit noch an Haltbarkeit.

Mit Hilfe einer eines der genannten Bindemittel enthaltenden Nachleuchtfarbe gemäss der Erfindung lassen sich auch noch andere Unterlagen als Kunststoffe und Leder, z.B. Papier, Textilgut u.dgl., gegebenenfalls dekorativ nachleuchtend markieren.

Dies geschieht zweckmässigerweise dadurch, dass man die bindemittelhaltige Nachleuchtfarbe aus einer zusätzlich ein übliches Treibmittel enthaltenden Sprühdose gegebenenfalls musterrecht auf die Unterlage aufsprüht. Bei Verwendung in Sprühdosen sollte die Teilchengrösse des den aktiven Bestandteil der Nachleuchtfarbe bildenden Zinksulfids 4,5 bis 10 $\mu$m betragen.

Sofern das Bindemittel der in der Sprühdose untergebrachten Nachleuchtfarbe bei deren Applikation ein zu starkes Schäumen bedingt, kann in der Nachleuchtfarbe auch noch ein übliches Entschäumungsmittel enthalten sein.

Eingangs wurde darauf hingewiesen, dass Siebdruckversuche mit eine Mischpolymerisatdispersion auf der Basis von Vinylpropionat als Bindemittel enthaltenden Nachleuchtfarben auf Zinksulfidbasis insoweit erfolglos waren, als sich das Zinksulfid nicht in geeigneter dauerhafter Weise auf der zu bedruckenden Unterlage verankern lässt. Erfindungsgemäss lassen sich diese Schwierigkeiten dadurch lösen, dass in der zum Siebdruck verwendeten Nachleuchtfarbe auf Zinksulfidbasis das bekannte Bindemittel teilweise oder vollständig durch ein Acrylsäureester/Vinylacetat-Mischpolymerisat ersetzt wird. Das Zinksulfid in einer zu Siebdruckzwecken verwendeten Nachleuchtfarbe gemäss der Erfindung sollte zweckmässigerweise eine Teilchengrösse von 10 bis 30, vorzugsweise von 10 bis 20 $\mu$m aufweisen.

Die Verankerung des Zinksulfids auf dem Untergrund ist dank des erfindungsgemäss verwendeten Bindemittels sehr fest und dauerhaft. So wurden beispielsweise mit einer erfindungsgemäss zu Siebdruckzwecken geeigneten Nachleuchtfarbe bedruckte Plakate, wie üblich, über Nacht in Leim eingeweicht und dann einem 3- bis 4wöchigen Bewetterungstest unterworfen. Hierbei zeigte es sich, dass sich die Nachleuchtfarbe nicht abgelöst hat und unverändert geblieben ist.

Ein sehr wichtiges Applikationsgebiet für eine erfindungsgemässe Nachleuchtfarbe ist schliesslich noch die Anbringung von nachts bei Lichteinwirkung besser sichtbaren Strassenmarkierungen. Im Gegensatz zu den bisher weitestgehend erfolglosen Versuchen lässt sich eine erfindungsgemäss als Bindemittel ein Acrylsäureester/Vinylacetat-Mischpolymerisat enthaltende Nachleuchtfarbe dauerhaft und abriebfest auf den verschiedensten Strassenbelägen verankern. Abgesehen davon, dass die auf den Strassenbelag aufgebrachten Markierungen bei unmittelbarer Belichtung bzw. Bestrahlung durch beispielsweise Autoscheinwerfer aufleuchten und für den Kraftfahrer besser sichtbar werden, behalten diese Markierungen nach beendeter Belichtung oder Bestrahlung ihre Leuchtkraft noch für eine gewisse Zeit bei, so dass sie von einem folgenden Kraftfahrer bereits früher, gegebenenfalls bereits bevor sie von den Scheinwerfern des später folgenden Kraftfahrzeugs erfasst werden, gesehen werden können.

Eine zur Strassenmarkierung verwendete Nachleuchtfarbe gemäss der Erfindung kann neben den beiden wesentlichen Bestandteilen auch noch beliebige übliche Reflexionsteilchen enthalten.

Die folgenden Beispiele sollen die Erfindung näher veranschaulichen.

Beispiel 1
(Druckfarbe zum Bedrucken von Textilgut durch Siebdruck)

| | |
|---|---|
| handelsübliches Acrylsäureester/-Vinylacetat-Mischpolymerisat (in Form einer wässrigen Dispersion) | 20% |
| handelsübliche Vinylpropionat-dispersion | 40% |
| ZnS | 40% |

Beispiel 2
(Strassenmarkierungsfarbe)

| | |
|---|---|
| übliche Markierungsfarbe | 620 g |
| nachleuchtendes ZnS | 180 g |
| wässrige Acrylsäureester/Vinyl-acetat-Mischpolymerisat-Dispersion | 200 g |
| | 1000 g |

## Patentansprüche

1. Nachleuchtfarbe zu Dekorations- oder Markierungszwecken mit nachleuchtendem Zinksulfid und einem Acrylharz als Bindemittel, dadurch gekennzeichnet, dass sie als Bindemittel ein Acrylsäureester/Vinylacetat-Mischpolymerisat oder ein Acrylsäureester/Styrol-Mischpolymerisat enthält.

2. Nachleuchtfarbe nach Anspruch 1, dadurch gekennzeichnet, dass sie aus einer Sprühdüse versprühbar ist.

3. Verwendung einer Nachleuchtfarbe nach Ansprüchen 1 und 2 mit einem Acrylsäureester/Vinylacetat-Mischpolymerisat als Bindemittel zum Siebdruck.

4. Verwendung einer Nachleuchtfarbe nach Ansprüchen 1 oder 3 zum gegebenenfalls dekorativen Markieren von Unterlagen.

5. Verwendung einer Nachleuchtfarbe nach Anspruch 1 zur Strassenmarkierung.

## Claims

1. A phosphorescent paint for decoration or marking purposes, comprising a phosphorescent zink sulfide and an acrylic resin as a binder characterized by containing an acrylic acid ester/vinyl acetate copolymer or an acrylic acid ester/styrene copolymer as the binder.

2. The phosphorescent paint according to claim 1, characterized in that it is adapted to be sprayed by means of a spray can.

3. The use of a phosphorescent paint according to claims 1 and 2 containing an acrylic acid ester/vinyl acetate copolymer as a binder in a screen printing method.

4. The use of a phosphorescent paint according to claims 1 or 3 for the, optionally decorative, marking of substrates.

5. The use of a phosphorescent paint according to claim 1 for road marking purposes.

## Revendications

1. Peinture luminescente utilisable dans des buts de décorations ou de marquage, comportant du sulfure de zinc luminescent et une résine acrylique comme liant, caractérisée en ce qu'elle contient, en tant que liant, un copolymère acrylate acétate vinylique ou un copolymère acrylate-styrol.

2. Peinture selon la revendication 1, caractérisée en ce qu'elle peut être appliquée par pulvérisation à l'aide d'un atomiseur.

3. Utilisation, pour la sérigraphie, d'une peinture luminescente selon les revendications 1 et 2, avec un copolymère acrylate/acétate vinylique en tant que liant.

4. Utilisation d'une peinture luminescente selon les revendications 1 ou 3, pour le marquage éventuellement décoratif de substrats.

5. Utilisation d'une peinture luminescente selon la revendication 1 pour le marquage des rues ou routes.